# EUROPEAN PATENT APPLICATION

(11) **EP 4 852 343 A1**
(43) Date of publication of application: **09.12.2026**
(21) Application number: 24923581.3
(22) Date of filing: 26.12.2024
(51) Int. Cl.: H04B 7/22, H04B 5/00, H04L 5/00

(54) **COMMUNICATION METHOD AND APPARATUS**

(30) Priority: 07.02.2024 CN 202410176145
(71) Applicant: HUAWEI TECHNOLOGIES CO., LTD., Shenzhen, Guangdong 518129 (CN)
(72) Inventor: SENG, Shuming, Shenzhen, Guangdong 518129 (CN); LI, Chenwan, Shenzhen, Guangdong 518129 (CN)
(74) Representative: Huawei European IPR
(86) International application number: PCT/CN2024/142914
(87) International publication number: WO 2025/167379

(57) **Abstract**

This application provides a communication method and apparatus, to provide a method for assisting, by using an auxiliary node, a terminal device in backscattering a signal. The method includes: sending configuration information and receiving a first signal from a terminal device, where the configuration information is for configuring a carrier sent by an auxiliary node, and the carrier is used by the terminal device to generate the first signal. In this manner, a network device can control the carrier of the auxiliary node by using the configuration information, so as to control a signal of the terminal device.

## Description

### CROSS-REFERENCE TO RELATED APPLICATIONS

This application claims priority to Chinese Patent Application No. 202410176145.0, filed with the China National Intellectual Property Administration on February 7, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

An operating principle of passive radio frequency identification (radio frequency identification, RFID) technology is as follows: A tag converts a radio signal sent by a reader into energy, and uses the energy to drive the tag to operate. In communication development, to reduce power consumption of a terminal device, the RFID technology is introduced into a communication network, for example, ambient internet of things (ambient IoT, A-IoT). The A-IoT is based on cellular network communication infrastructure and includes a reader and a passive/semi-passive/active tag. In this scenario, the tag is a terminal in a cellular network, for example, an internet of things terminal with extremely low power consumption and extremely low complexity. The reader may be a base station. In the A-IoT, the tag may backscatter a signal based on a carrier sent by an auxiliary node, and send the backscattered signal to a network device.

Currently, it has only been proposed that an auxiliary node can assist a tag in backscattering a signal, but there is no specific procedure yet for how the auxiliary node assists the tag in transmitting the signal.

### SUMMARY

This application provides a communication method and apparatus, to provide a method for assisting, by using an auxiliary node, a terminal device in backscattering a signal.

According to a first aspect, a communication method is provided. The method may be performed by a network device (or a core network device) or a chip, a chip system, or a circuit located in the network device (or the core network device). For example, the method is performed by the network device, and the method may be implemented through the following steps: sending configuration information, where the configuration information is for configuring a carrier sent by an auxiliary node, and the carrier is used by a terminal device to generate a first signal; and receiving the first signal from the terminal device.

In this application, the network device configures the carrier for the auxiliary node, so that the auxiliary node can provide the carrier for the terminal device. In this way, the terminal device can perform backscatter communication based on the carrier sent by the auxiliary node. In addition, the network device can control the carrier of the auxiliary node by using the configuration information, so as to control a signal of the terminal device.

In a possible design, the configuration information indicates at least one of the following: a frequency of the carrier, a signal type of the carrier, a modulation scheme of the carrier, time information of the carrier, or a transmit power of the carrier. In the foregoing design, the network device can control the frequency, the transmit power, or the like of the carrier to control a frequency, a transmit power, or the like of the signal of the terminal device.

In a possible design, that the configuration information indicates the frequency of the carrier includes: The configuration information indicates information about a bandwidth part corresponding to the carrier.

In a possible design, that the configuration information indicates the frequency of the carrier includes: The configuration information indicates adjustment information of the frequency of the carrier.

In a possible design, the method further includes: sending first information, where the first information is for triggering the auxiliary node to send the carrier, and/or the first information indicates sending duration of the carrier. According to the foregoing design, the network device can control whether to send or stop sending the carrier. Compared with a case in which the auxiliary node continuously sends a carrier, in this manner, power consumption of the auxiliary node can be reduced.

In a possible design, the duration corresponds to a first service, or the duration corresponds to data transmission, or the duration corresponds to a connection between the network device and the terminal device, or the duration corresponds to transmission of the first signal.

In a possible design, the duration is related to a signaling length or sending time of the first signal. According to the foregoing design, power consumption of the auxiliary node can be further reduced.

In a possible design, if the first signal is uplink data, the duration is first duration; or if the first signal is a random access message, the duration is second duration, and the first duration is greater than the second duration. According to the foregoing manner, sending of the first signal can be ensured while power consumption of the auxiliary node can be reduced.

In a possible design, that the first information indicates the sending duration of the carrier includes: The first information includes a sending duration value of the carrier; or the first information includes a transmission parameter of the terminal device, where the transmission parameter is for determining the duration value of the carrier.

In a possible design, the transmission parameter includes at least one of the following: a quantity of repetitions, a coding scheme, a transport block size, uplink transmission bandwidth, or a data processing delay.

In a possible design, the method further includes: sending second information, where the second information is for triggering the auxiliary node to send the carrier; and sending third information, where the third information is for triggering the auxiliary node to stop sending the carrier. According to the foregoing design, the network device can control whether to send or stop sending the carrier. Compared with a case in which the auxiliary node continuously sends a carrier, in this manner, power consumption of the auxiliary node can be reduced.

In a possible design, before sending the third information, the method further includes: determining that a first service is completed, data transmission is completed, or a connection with the terminal device is released; or determining that transmission of the first signal ends.

In a possible design, the method further includes: when a paging message or a random access message is received, indicating the auxiliary node to send the carrier, where the paging message is used by a core network to page the terminal device, and the random access message is used by the terminal device to perform random access. According to the foregoing design, it can be determined that the terminal device needs to send a signal. When the terminal device needs to send the signal, the auxiliary node is indicated to send the carrier, so that power consumption of the auxiliary node can be reduced while uplink transmission of the terminal device is ensured.

According to a second aspect, a communication method is provided. The method may be performed by an auxiliary node or a chip, a chip system, or a circuit located in the auxiliary node. For example, the method is performed by the auxiliary node. The method may be implemented through the following steps: receiving configuration information and sending a carrier based on the configuration information, where the configuration information is for configuring the carrier sent by the auxiliary node, and the carrier is used by a terminal device to generate a first signal.

In a possible design, the configuration information indicates at least one of the following: a frequency of the carrier, a signal type of the carrier, a modulation scheme of the carrier, time information of the carrier, or a transmit power of the carrier. In the foregoing design, the network device can control the frequency, the transmit power, or the like of the carrier to control a frequency, a transmit power, or the like of the signal of the terminal device.

In a possible design, that the configuration information indicates the frequency of the carrier includes: The configuration information indicates information about a bandwidth part corresponding to the carrier.

In a possible design, that the configuration information indicates the frequency of the carrier includes: The configuration information indicates adjustment information of the frequency of the carrier.

In a possible design, the method further includes: receiving first information, where the first information is for triggering the auxiliary node to send the carrier, and/or the first information indicates sending duration of the carrier. Compared with a case in which the auxiliary node continuously sends a carrier, in this manner, power consumption of the auxiliary node can be reduced.

In a possible design, the duration corresponds to a first service, or the duration corresponds to data transmission, or the duration corresponds to a connection between the network device and the terminal device, or the duration corresponds to transmission of the first signal.

In a possible design, the duration is related to a signaling length or sending time of the first signal. According to the foregoing design, power consumption of the auxiliary node can be further reduced.

In a possible design, if the first signal is uplink data, the duration is first duration; or if the first signal is a random access message, the duration is second duration, and the first duration is greater than the second duration. According to the foregoing manner, sending of the first signal can be ensured while power consumption of the auxiliary node can be reduced.

In a possible design, that the first information indicates the sending duration of the carrier includes: The first information includes a sending duration value of the carrier; or the first information includes a transmission parameter of the terminal device, where the transmission parameter is for determining the duration value of the carrier.

In a possible design, the transmission parameter includes at least one of the following: a quantity of repetitions, a coding scheme, a transport block size, uplink transmission bandwidth, or a data processing delay.

In a possible design, the method further includes: receiving second information before sending the carrier based on the configuration information, where the second information is for triggering the auxiliary node to send the carrier; and receiving third information after sending the carrier based on the configuration information, where the third information is for triggering the auxiliary node to stop sending the carrier. Compared with a case in which the auxiliary node continuously sends a carrier, in this manner, power consumption of the auxiliary node can be reduced.

According to a third aspect, this application further provides a communication apparatus. The apparatus is a network device or a chip in the network device. The communication apparatus has a function of implementing any method provided in the first aspect. The communication apparatus may be implemented by hardware, or may be implemented by executing corresponding software by hardware. The hardware or the software includes one or more units or modules corresponding to the foregoing functions.

In a possible design, the communication apparatus includes a processor. The processor is configured to support the communication apparatus in performing a corresponding function of the network device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like an auxiliary node, for example, data or signal receiving and sending. For example, the communication interface may be a transceiver, a circuit, a bus, a module, or a communication interface of another type.

In a possible design, the communication apparatus includes corresponding functional modules respectively configured to implement steps in the foregoing methods. The function may be implemented by hardware, or may be implemented by executing corresponding software by hardware. The hardware or software includes one or more modules corresponding to the foregoing functions.

In a possible design, a structure of the communication apparatus includes a processing unit and a communication unit. These units may perform corresponding functions in the foregoing method examples. For details, refer to the descriptions in the method according to the first aspect. Details are not described herein again.

According to a fourth aspect, this application further provides a communication apparatus. The apparatus is an auxiliary node or a chip in the auxiliary node, and the auxiliary node may be a terminal device or a network device (for example, a base station or a small cell). The communication apparatus has a function of implementing any method provided in the second aspect. The communication apparatus may be implemented by hardware, or may be implemented by executing corresponding software by hardware. The hardware or the software includes one or more units or modules corresponding to the foregoing functions.

In a possible design, the communication apparatus includes a processor. The processor is configured to support the communication apparatus in performing a corresponding function of the auxiliary node in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and devices such as a terminal device and a network device, for example, data or signal receiving and sending. For example, the communication interface may be a transceiver, a circuit, a bus, a module, or a communication interface of another type.

In a possible design, the communication apparatus includes corresponding functional modules respectively configured to implement steps in the foregoing methods. The function may be implemented by hardware, or may be implemented by executing corresponding software by hardware. The hardware or software includes one or more modules corresponding to the foregoing functions.

In a possible design, a structure of the communication apparatus includes a processing unit and a communication unit. These units may perform corresponding functions in the method examples. For details, refer to the descriptions in the method according to the second aspect. Details are not described herein.

According to a fifth aspect, a communication apparatus is provided. The communication apparatus includes a processor and an interface circuit. The interface circuit is configured to: receive a signal from a communication apparatus other than the communication apparatus, and transmit the signal to the processor; or send a signal from the processor to a communication apparatus other than the communication apparatus. The processor is configured to implement the method in any one of the first aspect and the possible designs by a logic circuit or by executing code instructions.

According to a sixth aspect, a communication apparatus is provided. The communication apparatus includes a processor and an interface circuit. The interface circuit is configured to: receive a signal from a communication apparatus other than the communication apparatus, and transmit the signal to the processor; or send a signal from the processor to a communication apparatus other than the communication apparatus. The processor is configured to implement the method in any one of the second aspect and the possible designs by a logic circuit or by executing code instructions.

According to a seventh aspect, a computer-readable storage medium is provided. The computer-readable storage medium stores a computer program or instructions. When the computer program or the instructions are executed by a processor, the method in any one of the first aspect or the second aspect and the possible designs is implemented.

According to an eighth aspect, a computer program product storing instructions is provided. When the instructions are run by a processor, the method in any one of the first aspect or the second aspect and the possible designs is implemented.

According to a ninth aspect, a chip system is provided. The chip system includes a processor, and may further include a memory. The chip system is configured to implement the method in any one of the first aspect or the second aspect and the possible designs. The chip system may include a chip, or may include a chip and another discrete component.

According to a tenth aspect, a communication system is provided. The system includes a network device, an auxiliary node, and a terminal device. The network device sends configuration information, where the configuration information is for configuring a carrier sent by the auxiliary node, and the carrier is used by the terminal device to generate a first signal. The auxiliary node sends the carrier based on the configuration information, and the terminal device sends the first signal based on the carrier.

For technical effects that can be achieved by the technical solutions in any one of the third aspect to the tenth aspect, refer to the descriptions of the technical effects that can be achieved by the technical solutions in the first aspect to the ninth aspect. Repeated parts are not described again.

### BRIEF DESCRIPTION OF DRAWINGS

FIG. 1 is a diagram of an architecture of a communication system according to an embodiment of this application;
FIG. 2 is a schematic flowchart of a communication method according to an embodiment of this application;
FIG. 3 is a diagram of an inventory method according to an embodiment of this application;
FIG. 4 is a diagram of an inventory method according to an embodiment of this application;
FIG. 5 is a diagram of an inventory method according to an embodiment of this application;
FIG. 6 is a diagram of an inventory method according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

Technical solutions provided in embodiments of this application may be applied to an internet of things (internet of things, IoT) system. The IoT includes an ambient internet of things (ambient IoT, A-IoT), a narrowband internet of things (narrowband internet of things, NB-IoT), and the like. An IoT technology is widely applied to various industry fields. For example, the IoT technology may be applied to scenarios such as logistics, warehousing, industrial manufacturing, identity identification, or environment monitoring. The IoT is implemented based on a radio frequency identification (radio frequency identification, RFID) technology. The RFID technology is a non-contact communication technology implemented in a radio frequency communication mode. A principle of the RFID technology is that a reader (reader) and a tag (tag) do not need to contact each other, and data communication is implemented by using radio waves. The IoT technology may be applied to a communication system related to a 3rd generation partnership project (3rd generation partnership project, 3GPP), for example, a long term evolution (long term evolution, LTE) communication system or a 5th generation (the sixth generation, 5G) mobile communication system, or may be applied to another next-generation mobile communication system, for example, a sixth generation (6G) communication system, or another similar communication system. The another similar communication system may include a wireless fidelity (wireless fidelity, Wi-Fi) system, a vehicle to everything (vehicle to everything, V2X) system, and the like.

This application may be applied to a communication system. The communication system may include a network device and a terminal device, and may further include an auxiliary node. The auxiliary node may send a carrier to the terminal device, or the carrier may be sent by the network device to the terminal device. The carrier is used by the terminal device to perform backscatter communication. For example, the carrier is used by the terminal device to send (or generate) a signal. For ease of understanding of the solution, the following uses an example in which an auxiliary node sends a carrier for description.

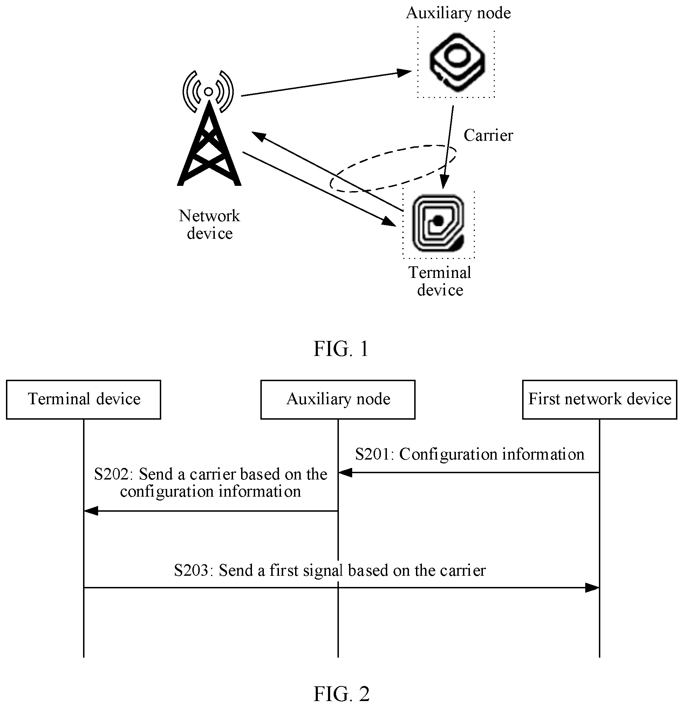

FIG. 1 is a diagram of a communication system according to an embodiment of this application. In FIG. 1, an example in which the communication system includes a terminal device, a network device, and an auxiliary node is used. A network architecture shown in FIG. 1 is merely an example. Quantities of terminal devices, network devices, and auxiliary nodes may be smaller or larger. The communication system described in this embodiment of this application is intended to describe the technical solutions in embodiments of this application more clearly, but constitutes no limitation on the communication system to which embodiments of this application are applicable. A person of ordinary skill in the art may learn that with evolution of the network architecture, the technical solutions provided in embodiments of this application are also applicable to a similar technical problem. When the technical solutions in embodiments of this application are applied to another communication system, the devices, components, modules, and the like in embodiments may be replaced with corresponding devices, components, and modules in the another communication system. This is not limited.

A device that can perform data communication with a network device may be considered as a terminal device. The terminal device is also referred to as a terminal, a terminal apparatus, user equipment (user equipment, UE), a mobile station, a mobile terminal, or the like. For example, the terminal device may be a mobile phone, a computer, a mobile internet device (mobile internet device, MID), a wearable device, a virtual reality (virtual reality, VR) device, an augmented reality (augmented reality, AR) device, a robotic arm, a camera, a robot, a smart home device (for example, a television, an air conditioner, a robot vacuum cleaner, a sound box, or a set-top box), a relay (relay), customer premises equipment (customer premises equipment, CPE), or a device having a tag function. For example, the terminal device may be a tag or the like in IoT/A-IoT. In FIG. 1, an example in which the terminal device is an A-IoT terminal is used.

The tag may be referred to as an RFID tag or an electronic tag, or may be referred to as an A-IoT terminal or an A-IoT device, and is usually attached to an object to identify a target object. The tag may receive a radio frequency signal from a reader. The tag may send, by using energy obtained from an induced current, information stored in a chip in the tag. Alternatively, the tag may actively send a signal at a specific frequency to the reader. The reader reads the information from the tag. A design of the tag is simple. Application layer signaling and air interface signaling are designed in an integrated manner, featuring low power consumption. The tag includes three types: an active tag, a passive tag, and a semi-active/semi-passive tag. The active tag is also referred to as an active tag (active tag). The passive tag is also referred to as a passive tag (passive tag). The semi-active/semi-passive tag is also referred to as a semi-passive tag (semi-passive tag). The active tag/active tag is equipped with a power supply, and uses a communication mode of actively generating a carrier. In other words, the active tag can actively send a signal to the reader, and does not need to obtain, based on a received signal, energy for sending the signal. The passive tag/passive tag is not equipped with a module like a power supply, or has a power supply module with a small amount of electricity. Therefore, the passive tag may use a backscatter (backscatter)-based communication mode, obtain energy from an environment, and send a signal by using the energy. The passive tag may operate in a backscatter communication scenario. For example, the passive tag obtains energy by backscattering a signal from the reader to transmit data. The semiactive/semi-passive tag integrates advantages of the active tag and the passive tag, and may be used as a special type of marker. Usually, the semi-active/semi-passive tag is in a sleep state, and may not operate or send a signal to the outside. The semi-active/semi-passive tag is activated and starts to operate only when entering a range of an activation signal of a low-frequency activator. The tag in embodiments of this application may be an active tag, a passive tag, a semi-active/semi-passive tag, or the like.

In an A-IoT scenario, the tag belongs to a terminal device. The terminal device in this application may be of the following three types: a passive terminal, which has no energy storage, cannot independently generate a signal, and transmits a signal through backscattering; a semi-passive terminal, which has energy storage, but cannot independently generate a signal, and transmits a signal through backscattering, where energy stored by the semi-passive terminal may be used to amplify a backscattered signal; and an active terminal, which has energy storage, can independently generate a signal, and has an active radio frequency element for transmission.

Both a tag device and the reader may be implemented based on infrastructure in a cellular network, or the tag device and the reader may be devices in the cellular network. For example, a function of the reader may be implemented by a network device or a terminal device. In this application, an example in which the function of the reader is implemented by the network device is used for description. The tag device may be implemented by a terminal device in the cellular network. For example, the tag device may be an internet of things terminal with extremely low power consumption and extremely low complexity. When the terminal device has a function of the tag device, non-contact data communication may be performed between the terminal device and the network device or another terminal device.

If the various terminal devices described above are located on a vehicle (for example, placed/mounted in the vehicle), the terminal devices may all be considered as vehicle-mounted terminal devices. The vehicle-mounted terminal device may be a vehicle-mounted module, a vehicle-mounted assembly, a vehicle-mounted component, a vehicle-mounted chip, or a vehicle-mounted unit that is built in the vehicle as one or more components or units. The vehicle-mounted terminal device may alternatively be an entire vehicle device, a vehicle-mounted module, a vehicle, an on-board unit (on-board unit, OBU), a roadside unit (roadside unit, RSU), a telematics box (telematics box, T-box) (also referred to as an in-vehicle sending unit), a chip, a system on chip (system on chip, SoC), or the like. The chip or the SoC may be mounted in the vehicle, the OBU, the RSU, or the T-box.

In embodiments of this application, an apparatus configured to implement a function of the terminal device may be the terminal device, or may be an apparatus that can support the terminal device in implementing the function, for example, a chip system or a combined device or component that can implement the function of the terminal device. The apparatus may be mounted in the terminal device. A specific technology and a specific device form that are used by the terminal device are not limited in embodiments of this application. For example, in embodiments of this application, the terminal device may be in a tag form, or may be in another terminal form. Unless otherwise specified, the terminal device and the tag can be replaced with each other.

The network device may also be referred to as a radio access network (radio access network, RAN) device. The RAN may be a 3GPP-related cellular system, for example, an LTE system, a new radio (new radio, NR) system, or a future-oriented evolved system (for example, a 6G mobile communication system). Alternatively, the RAN may be an open access network (open RAN, O-RAN or ORAN), a cloud radio access network (cloud radio access network, CRAN), a virtualized radio access network (virtualized RAN, vRAN), or the like. Alternatively, the RAN may be a communication system that integrates two or more of the foregoing systems. The RAN device may also be referred to as a RAN node, a RAN entity, an access node, or the like. For example, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, or the like. The RAN node may be an RSU in a V2X technology, an access node in a Wi-Fi system, or the like.

Alternatively, the RAN node may be a module or unit that completes a part of functions of a base station. Alternatively, a plurality of RAN nodes cooperate to assist the terminal device in implementing wireless access. Different RAN nodes each implement a part of functions of the base station. For example, the RAN node may be a central unit (central unit, CU), a distributed unit (distributed unit, DU), or a radio unit (radio unit, RU). In different systems, the CU, the DU, or the RU may alternatively have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. The CU and the DU may be configured based on protocol layer functions of a wireless network that are implemented by the CU and the DU. Protocol layers separately configured for the CU and the DU are not limited in embodiments of this application. Any one of the CU, the DU, and the RU in this application may be implemented by a software module, a hardware module, or a combination of the software module and the hardware module.

In embodiments of this application, the reader may be built in the network device. When the terminal device is a tag, the tag may communicate with the network device through a Uu interface, as shown in FIG. 1. Functions of the reader may be further separated. The reader is divided into a receiver (receiver) and a helper (helper). The receiver is also referred to as a receive end or a receiving unit, and the helper is also referred to as an excitation end or an excitation unit. The helper unit is equivalent to a transmitter in the reader, and the receiving unit is equivalent to the receiver in the reader. When the reader is implemented in a separated architecture, different entities of the reader may be deployed on different network devices. For example, the helper is deployed on a first network device, and is configured to perform a sending function of the reader; and the receiver is deployed on a second network device, and is configured to perform a receiving function of the reader. Transmission may be performed between the helper and the reader/network device through an air interface, or may be performed in a wired connection manner.

In embodiments of this application, an apparatus configured to implement a function of the network device may be the network device, or may be an apparatus that can support the network device in implementing the function, for example, a chip system or a combined device or component that can implement the function of the network device. The apparatus may be mounted in the network device. A specific technology and a specific device form that are used by the network device are not limited in embodiments of this application.

The auxiliary node may be a terminal device, a base station, or a small cell. The device may perform only downlink transmission with an A-IoT terminal, for example, a tag (in other words, the device provides only an excitation signal, for example, a carrier wave (carrier wave) or an energy signal, to trigger the A-IoT terminal to send a signal); and may perform uplink and downlink data transmission with a reader or a network device through an air interface or a wired connection.

In embodiments of this application, an apparatus configured to implement a function of an auxiliary node may be the auxiliary node, or may be an apparatus that can support the auxiliary node in implementing the function, for example, a chip system or a combined device or component that can implement the function of the auxiliary node. The apparatus may be mounted in the auxiliary node. A specific technology and a specific device form that are used by the auxiliary node are not limited in embodiments of this application.

In embodiments of this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural.

In addition, unless otherwise stated on the contrary, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, first information and second information are merely used to distinguish different information, but do not indicate a difference in priority, importance, or the like between the two pieces of information.

It should be noted that in this application, the term such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the terms such as "example" or "for example" is intended to present a relevant concept in a specific manner.

The terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

Tags may be used in a plurality of industries and fields. Logistics management is a typical application, and is implemented by performing inventory on physical tags. For tag inventory, the tags need to access a network. After each tag performs random access to the network, the tag may report an identifier of the tag to a reader, so that the reader can determine presence of tags within a coverage area of the reader. After accessing the network, the tag may exchange some service information with a network device (for example, the reader) and/or a core network element. For example, the core network element may forward a message to the tag through the network device, where the message may include information about an operation that needs to be performed on the tag. Alternatively, the network device may forward, to the core network element, a message from the tag, and the network device may parse or process a message from the core network element or the tag. Common tag services include inventory, read (Read), write (Write), positioning (Positioning), kill (Kill), and obtaining tag information. Inventory may also be referred to as stocktaking, and may be for obtaining identifiers of all tags within a coverage area of the network device. Read may be for reading data from a tag. Write may be for writing data into a tag. Positioning may be for obtaining location information of a tag. Kill, which may also be referred to as deactivation, may be for invalidating or deactivating a tag identifier. Obtaining tag information may be for obtaining information about a tag, for example, an identifier of the tag, information stored in the tag, and location information of the tag. The foregoing tag services are merely examples, and a quantity and types of tag services are not limited in embodiments of this application. For example, the tag services further include an authentication service.

The following describes technical background related to embodiments of this application.

As shown in FIG. 1, A-IoT may further include the auxiliary node, where the auxiliary node may send a carrier to a tag, and the tag may backscatter a signal based on the carrier sent by the auxiliary node. Currently, it has only been proposed that an auxiliary node can assist a tag in backscattering a signal, but there is no specific procedure yet for how the auxiliary node assists the tag in transmitting the signal.

Based on this, embodiments of this application provide a communication method and apparatus, to provide a method for assisting, by using an auxiliary node, a tag in backscattering a signal. The method and the apparatus are based on a same inventive concept. Because the method and the apparatus have a similar problem-resolving principle, for implementations of the apparatus and the method, refer to each other. Repeated descriptions are not provided. The method and the apparatus are based on a same inventive concept. Because the method and the apparatus have a similar problem-resolving principle, for implementations of the apparatus and the method, refer to each other. Repeated descriptions are not provided.

For example, the communication method provided in this embodiment of this application may be applied to an A-IoT scenario. In the A-IoT scenario, a terminal device may have a backscatter communication capability. The backscatter communication capability refers to a capability of backscattering a signal by relying on an energy signal like a carrier. Optionally, when a signal is backscattered, the energy signal may reach a specific threshold.

For ease of understanding, some terms in embodiments of this application are explained and described, to facilitate understanding by a person skilled in the art.
1. Select (Select) signaling may be for selecting or paging a terminal device, for example, an A-IoT terminal device. This is not specifically limited herein. The select signaling may include mask (mask) information, and the mask information is for filtering terminal devices. For example, a mask carried in the select signaling is a 4-bit mask "0000", and a mask of a terminal device (assuming that the terminal device is a terminal A) is "00001111". Because the first 4 bits in "00001111" match the mask carried in the select signaling, the terminal A falls within a selection range of the select signaling, and the terminal A may respond to the select signaling. Alternatively, the select signaling may carry an identifier or a group identifier of a terminal device. For example, the select signaling includes a container (filter), and the filter is for filtering terminal devices to be paged. The filter may be an identifier or a group identifier of a terminal device, and is for paging a terminal device or a group of terminal devices. Alternatively, the filter may indicate a type of a terminal device, in other words, the filter is for paging terminal devices of the type. It may be understood that the filter is for filtering terminal devices, and the filter may also be referred to as filtering information. A specific name of the filter is not limited in embodiments of this application.

A paging message (paging message) may also be for paging a terminal device.

2. Query (Query signaling)/repeated query (QueryRep) signaling may be for triggering start of an inventory procedure, or may indicate a time/slot resource for random access. In a specific example, the query signaling/QueryRep signaling is for determining a quantity of to-be-allocated access resources, and the access resources are for receiving access information. For example, eight access resources are allocated. After receiving the query signaling/QueryRep signaling, a terminal device may randomly select one of the access resources, and initiate access/send a random access request/send uplink data on the access resource.

Names of messages/signaling in this application are merely examples. A specific name of each message/signaling is not limited in this application. Any name that meets a function/limitation/meaning/description or the like of a message/signaling may be understood as referring to the message/signaling. For example, the paging message and the select signaling are merely example names of a paging message, and may be both understood as the paging message in this application provided that the paging message and the select signaling meet a function/limitation/meaning/description of the paging message in this application.

The following describes an example in which the communication method provided in embodiments of this application is performed by a network device and a terminal. For example, the terminal device may be a terminal device having a backscatter communication capability, for example, an A-IoT terminal device. Steps performed by the network device may be implemented by the network device, or may be implemented by a component (for example, a module like a baseband chip, another processing unit, or a processor) in the network device. Steps performed by an auxiliary node may be implemented by the auxiliary node, or may be implemented by a component (for example, a module like a chip, a processing unit, or a processor) in the auxiliary node.

In this application, a carrier may also be referred to as an excitation signal, an excitation carrier, or the like.

In this application, a frequency of the carrier may also be referred to as a transmission frequency, a transmit frequency, a frequency domain resource, or the like of the carrier.

The following describes the technical solutions in embodiments of this application with reference to the accompanying drawings in embodiments of this application.

FIG. 2 is a schematic flowchart of a communication method according to an embodiment of this application.

S201: A first network device sends configuration information. Correspondingly, an auxiliary node receives the configuration information.

The configuration information is for configuring a carrier sent by the auxiliary node, and the carrier is used by a terminal device to generate a first signal, or the carrier is used by the terminal device to send a first signal. In this application, the terminal device has a backscatter communication capability, and the terminal device may perform backscatter communication based on the carrier sent by the auxiliary node. In other words, the terminal device may generate (or send) a signal based on the carrier.

The following describes two implementations in which the terminal device performs backscatter communication based on the carrier.

In a possible implementation, the terminal device determines a corresponding carrier frequency based on the carrier, and sends a signal based on the carrier frequency.

A transmit frequency f1 of the signal sent by the terminal device may be equal to the carrier frequency f2. For example, when the terminal device does not have a frequency shift capability, or when the first network device indicates the terminal device not to perform a frequency shift, or when it is defined in a protocol that the terminal device does not perform a frequency shift, f1=f2.

Alternatively, the transmit frequency f1 of the first signal may be different from the carrier frequency f2. For example, f1 may be shifted upward relative to f2, that is, f1=f2+Δf. For another example, f1 may be shifted downward relative to f2, that is, f1=f2-Δf, where Δf is a positive number. For example, when the terminal device has the frequency shift capability, or when the first network device indicates the terminal device to perform a frequency shift, or when it is defined in a protocol that the terminal device performs a frequency shift, f1≠f2. Optionally, a value of Δf may be indicated by the first network device, or may be determined by the terminal device, or may be defined in a protocol. Whether f1 is shifted upward or shifted downward relative to f2 may be indicated by the first network device, or may be determined by the terminal device, or may be defined in a protocol.

In another possible implementation, the terminal device modulates the received carrier to generate a to-be-sent signal.

For example, the carrier may be a monophonic signal, an orthogonal frequency division multiplexing (orthogonal frequency division multiplexing, OFDM) signal, an on-off-keying (on-off-keying, OOK) signal, an amplitude-shift keying (amplitude-shift keying, ASK) signal, a phase shift keying (phase shift keying, PSK) signal, a frequency-shift keying (frequency-shift keying, FSK) signal, or the like. It should be understood that the carrier is merely an example name, and the carrier may be a radio signal, a radio frequency signal, or any signal sent by the auxiliary node. A name of the signal is not specifically limited in this application.

In a possible example, the first signal is for carrying information sent by the terminal device to the network device. For example, the first signal may carry a random access message (a random number/a random access identifier, or the like), uplink data, a feedback message for downlink data/a downlink message, or the like. For example, the uplink data may be an electronic product code (electronic product code, EPC), an extended product code (extended product code, XPC), a tag identifier (tag ID), a user identifier (UE ID), application layer data, a commodity code, or the like, or other data stored in a tag memory bank (memory bank), and may be used by a reader to identify a tag or complete a service (for example, inventory, positioning, sensing, tracking, reading, writing, locking, or killing).

For example, the configuration information may indicate at least one of the following: a frequency of the carrier or a transmit power of the carrier. The following separately describes the configuration information from perspectives of the frequency of the carrier and the transmit power of the carrier.
(1) The configuration information indicates the frequency of the carrier.

The configuration information may indicate the frequency of the carrier in three manners.

Manner A: The configuration information may indicate information about a bandwidth part corresponding to the carrier, and the bandwidth part may be a BWP dedicated to the carrier. Optionally, the configuration information may further indicate a location of the frequency of the carrier in the bandwidth part. For example, the configuration information may further indicate, in the bandwidth part, a frequency domain unit (for example, a resource block) in which the frequency of the carrier is located.

Manner B: The configuration information may indicate location information of the frequency of the carrier, for example, a frequency band or a frequency.

Manner C: The configuration information may indicate adjustment information of the frequency of the carrier.

For example, the adjustment information may be a frequency adjustment value (or a frequency change value) n. For example, the frequency adjustment value indicates to shift upward (or shift downward) the frequency of the carrier by n, where n may be a value greater than 0, or may be a value less than 0. This is not specifically limited herein. For example, the frequency adjustment value may be equal to a difference between the frequency of the carrier and a reception frequency of a second signal received by the first network device before S201. A unit of the frequency adjustment value may be hertz (Hz), a carrier/subcarrier, a resource block (resource block, RB), kilohertz (kHz), or the like.

For example, assuming that the frequency of the carrier is N, and the frequency adjustment value is n, a frequency at which the auxiliary node sends the carrier this time may be N+n or N-n.

The frequency N may be a frequency of a carrier sent by the auxiliary node before S201. Alternatively, the frequency N may be a frequency of a carrier most recently configured by the first network device. For example, the frequency N may be most recently configured by the first network device by using a broadcast message or a unicast message. Alternatively, the frequency N may be a frequency defined in a protocol.

For another example, the adjustment information may alternatively be the reception frequency of the second signal received by the first network device before S201.

In some possible scenarios, there may be a deviation between a frequency of a signal received by the first network device from the terminal device and an indicated frequency of the carrier. In the foregoing manner, the first network device may adjust the frequency of the carrier of the auxiliary node by using the configuration information, to adjust a frequency offset of the terminal device, thereby improving communication performance between the first network device and the terminal device.

In a possible implementation, the configuration information may indicate the frequency of the carrier by using one or more fields. The following describes, by using an example, eight fields in the configuration information that may indicate the frequency of the carrier.
1. FrequencyBandList/MultiFrequencyBandListNR: The field indicates a list including a frequency band to which the carrier (or a plurality of subcarriers) belongs. In this application, the field may indicate a list including a frequency band to which the frequency of the carrier belongs.
2. absoluteFrequencyPointA/ARFCN-ValueNR: The field indicates an absolute frequency location, and the lowest subcarrier of the absolute frequency location is also called a point A. In this application, the field may indicate an absolute frequency location of the frequency of the carrier.
3. scs-SpecificCarrierList: The field indicates a set of carriers for different subcarrier spacings (numerologies). The carrier set is defined in relation to the point A. The first network device may configure one specific carrier (scs-SpecificCarrier) for each subcarrier spacing used in the bandwidth part corresponding to the carrier.
4. locationAndBandwidth: The field indicates a frequency domain location and bandwidth that corresponds to a bandwidth part. In this application, the field may indicate a frequency domain location and bandwidth that corresponds to the BWP corresponding to the carrier.
5. subcarrierSpacing: The field indicates a subcarrier spacing. In this application, the field may indicate a subcarrier spacing of the frequency of the carrier.
6. cyclicPrefix: The field indicates whether an extended cyclic prefix is used for the bandwidth part.
7. subCarrierLocation=INTEGER(0..11): The parameter indicates a subcarrier location for sending a control word. A value of 0 corresponds to one resource block, a value of 1 corresponds to two resource blocks, and so on.
8. powerIndication=INTEGER(16..31): The parameter indicates the transmit power of the carrier. A value of 16 indicates 16 dBm, a value of 17 indicates 17 dBm, and so on.

For ease of understanding, the following provides an example with reference to the foregoing fields for description.

The configuration information may include the FrequencyBandList field, where FrequencyBandList indicates frequency band (or frequency band) information of the carrier. For example, FrequencyBandList is a list including a plurality of frequency bands, and the plurality of frequency bands include a frequency band to which the carrier belongs.

The configuration information may further include the absoluteFrequencyPointA field, where the absoluteFrequencyPointA field indicates an absolute frequency point A, and indicates an absolute frequency location of a reference resource.

The configuration information may further include the locationAndBandwidth field, where the locationAndBandwidth field indicates the frequency domain location and the bandwidth of the bandwidth part corresponding to the carrier.

The configuration information may further include a subCarrierIndex field, where the subCarrierIndex field indicates a subcarrier index in a resource block used for carrier transmission.

In a possible implementation, a frequency range (or a frequency range) may be configured by using a broadcast message, and the frequency of the carrier may be adjusted to a specified frequency (or a specified frequency) by using a unicast message. For example, the broadcast message may include the FrequencyBandList field, the absoluteFrequencyPointA field, the locationAndBandwidth field, and the subCarrierIndex field described above, and the unicast message carries a field that indicates information for adjusting the frequency of the carrier.

Optionally, the carrier may be configured in an intra-band manner, or may be configured in an inter-band manner. "Intra-band" may mean that the frequency of the carrier or the frequency band in which the carrier is located is in the same frequency band as that of a communication system in which the terminal device is located or to which the terminal device is connected. "Inter-band" may mean that the frequency of the carrier or the frequency band in which the carrier is located is in a different frequency band from that of the communication system in which the terminal device is located or to which the terminal device is connected. Using an NR system as an example, "intra-band" may mean that the carrier and the NR system are in the same frequency band, and "inter-band" may mean that the carrier and the NR system are in different frequency bands.

In an example, if the carrier is configured as an intra-band subcarrier, the FrequencyBandList field, the absoluteFrequencyPointA field, and the locationAndBandwidth field may be included in information for configuring the bandwidth part corresponding to the carrier, and the subCarrierIndex field may be included in the configuration information of the carrier.

If the carrier is configured as an inter-band subcarrier, the FrequencyBandList field, the absoluteFrequencyPointA field, the locationAndBandwidth field, and the subCarrierIndex field are all included in the configuration information of the carrier.

It should be understood that names of the foregoing fields are merely examples, and names of the foregoing fields are not limited in this application. In addition, information about the frequency of the carrier may alternatively be carried in another field. This is not specifically limited in this application.

(2) The configuration information indicates the transmit power of the carrier.

The configuration information may indicate the transmit power of the carrier in two manners.

Manner D: The configuration information may indicate a transmit power value of the carrier. For example, information about the transmit power of the carrier is indicated by 4 bits, and the 4 bits indicate the transmit power from 16 dBm to 31 dBm. If the information about the transmit power of the carrier is 0000, it indicates that the transmit power of the carrier is 16 dBm; if the information about the transmit power of the carrier is 0001, it indicates that the transmit power of the carrier is 17 dBm; and so on.

Manner E: The configuration information may be a transmit power adjustment value (or a transmit power change value) y, where y may be a value greater than 0, or may be a value less than 0. For example, the transmit power adjustment value may indicate to increase (or decrease) the transmit power of the carrier by y. For example, assuming that the transmit power of the carrier is P, and the transmit power adjustment value y=1 dBm, the transmit power of the carrier indicated by the configuration information is P+1 dBm. The transmit power P may be a value defined in a protocol. Alternatively, the transmit power P may be preconfigured by the first network device. For example, the first network device preconfigures the transmit power P by using a message like a broadcast message or a unicast message. Alternatively, the transmit power P may be a transmit power of the carrier sent by the auxiliary node before S201.

Optionally, the configuration information may further indicate at least one of the following: a modulation scheme of the carrier, a signal type of the carrier, or time information of the carrier. For example, the modulation scheme of the carrier may be OOK, ASK, PSK, FSK, or the like. The signal type of the carrier may be a monophonic signal, an OFDM signal, an OOK signal, an ASK signal, a PSK signal, an FSK signal, or the like.

For example, the time information of the carrier may include start time and/or end time of the carrier. The start time of the carrier may be understood as time at which sending of the carrier starts, and the end time of the carrier may be understood as time at which the sending stops.

For example, the start time/end time may be in a unit of a time unit like a frame, a subframe, a superframe, or a slot; or duration may be in a unit of absolute time like a second/millisecond.

Optionally, the configuration information may be carried in a paging message, a synchronization message, a system message, radio resource control (radio resource control, RRC) reconfiguration information (RRCReconfiguration), downlink control information, an RRC connection establishment/re-establishment/resume/release message, an access stratum (access stratum, AS) release, a service release, a media access control control element (media access control control element, MAC CE), a synchronization message, or the like.

In a possible example, the configuration information may be carried in a broadcast message and/or a unicast message. For example, a part of the configuration information may be sent by using the broadcast message, and the other part of the configuration information may be sent by using the unicast message. For another example, the entire configuration information may be sent by using a broadcast message or a unicast message.

In a possible implementation, the configuration information may be determined by the first network device, or may be sent by the terminal device or a core network device to the first network device, and then sent by the first network device to the auxiliary node.

As an alternative solution of S201, the configuration information may alternatively be sent by the core network device to the auxiliary node. For example, the core network device may send the configuration information to the auxiliary node by using a message like a unicast message/broadcast message/multicast message or a non-access stratum (non-access stratum, NAS) message.

S202: The auxiliary node sends the carrier based on the configuration information. Correspondingly, the terminal device receives the carrier.

In a possible implementation, the auxiliary node may determine, based on the time information of the carrier in the configuration information, an occasion for starting to send the carrier and an occasion for stopping sending the carrier. For example, the occasion for starting to send the carrier is determined based on the start time of the carrier, and the occasion for stopping sending the carrier is determined based on the end time of the carrier.

In another possible implementation, the auxiliary node may alternatively start to send the carrier and stop sending the carrier as indicated by the first network device. Specifically, in this implementation, the following describes the occasion at which the auxiliary node starts to send the carrier and the occasion at which the auxiliary node stops sending the carrier.

S203: The terminal device sends the first signal based on the carrier.

For a manner in which the terminal device sends the first signal based on the carrier, refer to related descriptions in S201. Details are not described herein again.

Optionally, the first signal may be sent to the first network device. Correspondingly, the first network device receives the first signal. Alternatively, the first signal may be sent to a second network device. Correspondingly, the second network device receives the first signal. For example, in a split architecture, the first network device may be a central unit (central unit, CU), and the second network device may be a distributed unit (distributed unit, DU). Alternatively, the first signal may be sent to another device. This is not specifically limited herein.

If the first signal is sent to the first network device, in a possible implementation, the terminal device may directly send the first signal to the first network device, or may send the first signal to the first network device through a relay device.

In this application, the first network device configures the carrier for the auxiliary node, so that the auxiliary node can provide the carrier for the terminal device. In addition, the first network device can control the carrier of the auxiliary node by using the configuration information, so as to control a signal of the terminal device. For example, the first network device can control the frequency, the transmit power, or the like of the carrier to control a frequency, a transmit power, or the like of the signal of the terminal device.

The following describes two implementations in which the auxiliary node determines the occasion for starting to send the carrier and the occasion for stopping sending the carrier.

### Implementation 1:

The first network device may send first information to the auxiliary node. The first information is for triggering the auxiliary node to send the carrier. The first information may be carried in a unicast message or a broadcast message.

In an example, the first information may explicitly trigger the auxiliary node to send the carrier. In this example, the auxiliary node may start to send the carrier after receiving the first information.

Optionally, in this example, the first information may further indicate sending duration of the carrier, and the auxiliary node may determine, based on the sending duration of the carrier, the occasion (or time) for stopping sending the carrier. For example, the first information includes a field indicating to send the carrier and a field indicating the sending duration of the carrier. Optionally, after receiving the first information, the auxiliary node may send the carrier based on the indicated duration, for example, send the carrier for the indicated duration.

For example, the duration may be in a unit of a time unit like a frame, a subframe, a superframe, or a slot; or the duration may be in a unit of absolute time like a second/millisecond.

In another example, the first information may alternatively implicitly trigger, by indicating the sending duration of the carrier, the auxiliary node to send the carrier. In this example, the auxiliary node may start to send the carrier after receiving the first information, and determine, based on the sending duration of the carrier, the occasion (or time) for stopping sending the carrier.

For example, the first information may include a field indicating the sending duration of the carrier, and does not include the field indicating to send the carrier. After receiving the first information, the auxiliary node determines, based on the field indicating the sending duration of the carrier, that the carrier is to be sent, and sends the carrier based on the indicated duration, for example, sends the carrier for the indicated duration.

Optionally, when the auxiliary node sends the carrier based on the first information, the auxiliary node may specifically start to send the carrier after a first time offset following reception of the first information. The first time offset may be indicated by the first network device. For example, the first time offset is indicated by using the first information. Alternatively, the first time offset may be determined by the auxiliary node. Alternatively, the first time offset may be defined in a protocol. For example, the first time offset may be in a unit of a time unit like a frame, a subframe, a superframe, or a slot; or a duration value may be in a unit of absolute time like a second/millisecond.

Two manners in which the first information indicates the duration of the carrier are described herein.

In one manner, the first information may indicate a sending duration value of the carrier. For example, the first information may indicate, by using 7 bits, 128 consecutive numbers as time values 1 to 128. Optionally, a unit may be indicated by using other information or another bit in the first information. For example, 0 indicates microseconds, and 1 indicates milliseconds. Alternatively, the unit may be a default unit defined in a protocol. For another example, the first information may indicate, by using an index (index), the sending duration value. For example, if index=0, no sending is performed, or if no indication is provided, no sending is performed by default; if index=1, the sending duration is 62.5 microseconds; if index=2, the duration is 212.5 microseconds; and so on.

In another manner, the first information includes a transmission parameter of the terminal device, where the transmission parameter is for determining the sending duration value of the carrier. In the manner, the auxiliary node may determine, based on the transmission parameter of the terminal device, the sending duration value of the carrier.

For example, the transmission parameter includes at least one of the following: a quantity of repetitions, a coding scheme, a transport block size, uplink transmission bandwidth, or a data processing delay.

The quantity of repetitions may be a quantity of bit repetitions, a quantity of level repetitions, or the like.

The coding scheme may be a convolutional code, a polar code, or the like.

The transport block size may be obtained by the first network device. For example, the transport block size may be defined in a protocol; or the transport block size may be sent by the core network device to the first network device; or the transport block size may be sent by the terminal device to the first network device; or the transport block size may be determined based on some configuration parameters by the first network device. For example, a transport block may include one or more of a preamble (preamble) bit, an uplink data bit (UL data size), a mid-amble (mid-amble) bit, a post-amble (post-amble) bit, and a cyclic redundancy check (cyclic redundancy check, CRC) bit. Therefore, a quantity of bits of the transport block may be a sum of a quantity of bits of one or more of the preamble bit, the uplink data bit, the mid-amble bit, the post-amble bit, or the CRC bit. For example, the duration of the carrier may be greater than or equal to uplink data time, where the uplink data time=preamble/start delimiter time+data bits*transmission time per bit+post-amble/end delimiter (post-amble) time.

It should be noted that the transport block may also be referred to as a data block, data, a data segment, a bit sequence, or the like.

The uplink transmission bandwidth may be uplink transmission bandwidth of the terminal device, and further, may be uplink transmission bandwidth of the A-IoT terminal device.

For the data processing delay, after receiving downlink data, the A-IoT terminal device sends uplink data after a processing delay. The processing delay may be understood as the data processing delay in this application.

In still another manner, the first information may include moment information (for example, a specific moment) at which sending of the carrier is stopped, and the sending duration of the carrier may be indicated based on the moment information.

In Implementation 1, the sending duration of the carrier may correspond to a first service. In other words, the auxiliary node continuously sends the carrier during the first service between the first network device and the terminal device until the first service ends. For example, the first service may be an ambient internet of things service, for example, a service like inventory, positioning, sensing, tracking, reading, writing, locking, killing, registration, authentication, authorization, and validity verification.

Alternatively, the sending duration of the carrier may correspond to data transmission. In other words, the auxiliary node continuously sends the carrier during data transmission between the first network device and the terminal device until the data transmission is completed.

Alternatively, the sending duration of the carrier may correspond to a connection between the first network device and the terminal device. In other words, the auxiliary node continuously sends the carrier during a period in which the connection between the first network device and the terminal device is maintained, until the connection between the first network device and the terminal device is released.

In an example description, in A-IoT, a connection concept may not apply to an A-IoT terminal device. Instead, the terminal device receives a downlink signal to trigger sending of a next uplink signal. In this scenario, "the period in which the connection is maintained" may be understood as a period in which the first network device or the core network device has to-be-transmitted downlink signaling/data, a process before the core network device sends a first identifier to the first network device, or a period before the first network device receives a second identifier from the core network device. In other words, the auxiliary node continuously sends the carrier during the period in which the first network device or the core network device has to-be-transmitted downlink signaling/data, or during the process before the core network device sends the first identifier to the first network device, or during the period before the first network device receives the second identifier from the core network device.

The first identifier/second identifier may indicate service end/context release/terminal energy saving or sleep indication/discontinuous reception, or the like.

Alternatively, the sending duration of the carrier may correspond to transmission of the first signal. In other words, the auxiliary node continuously sends the carrier during transmission of the first signal until sending of the first signal ends.

Optionally, if the sending duration of the carrier corresponds to transmission of the first signal, the sending duration of the carrier may also be related to processing duration of the first signal by the terminal device or duration needed for sending the first signal. For example, the sending duration of the carrier may be greater than or equal to a sum of the processing duration of the first signal and the duration needed for sending the first signal. In a specific example, because the terminal device needs extra processing time for some specific signaling such as signaling for data writing, signaling for data reading, and signaling for killing, the sending duration of the carrier may be greater than or equal to a sum of the following duration: the processing duration of the first signal, the duration needed for sending the first signal, and redundancy time.

In a possible implementation, the sending duration of the carrier may be determined based on a terminal device with farthest coverage or poorest coverage.

Further, optionally, the duration needed for sending the first signal is related to a signaling length of the first signal. For example, a larger signaling length of the first signal indicates larger duration needed for sending the first signal. Therefore, because a signaling length of uplink data is usually greater than a signaling length of a random access message, if the first signal is uplink data, the duration may be first duration, or if the first signal is a random access message, the duration may be second duration, and the first duration is greater than the second duration.

In a possible solution, the first network device may determine the sending duration of the carrier based on a random access message sent by the terminal device. For example, if the first network device receives the random access message of the terminal device, the first network device indicates that the sending duration of the carrier is the first duration. If the first network device does not receive the random access message of the terminal device or cannot parse the random access message of the terminal device, the first network device indicates that the sending duration of the carrier is the second duration.

It should be understood that uplink data may also correspond to different duration. For example, different bit lengths of uplink data lead to different duration needed for sending the uplink data. Therefore, different duration may be configured for uplink data having different bit lengths. For example, if uplink data has a large bit length, corresponding sending duration of the carrier is also large. For another example, different coverage levels lead to differences in coding schemes, code rates, preamble lengths, or the like of uplink data, resulting in different time needed for sending the uplink data. In this way, different duration may be configured for uplink data at different coverage levels.

Similarly, the random access message may also correspond to different duration. For example, different bit lengths of random access messages lead to different duration needed for sending the random access messages. Therefore, different duration may be configured for random access messages having different bit lengths. For example, if a random access message has a large bit length, corresponding duration of the carrier is also large. For another example, because different coverage levels lead to different time needed for sending random access messages, different duration may be configured for random access messages at different coverage levels.

Optionally, time at which the carrier is sent may be orthogonal to (or staggered from) time at which the first network device/relay device sends a downlink message. In this manner, a case in which the terminal device fails to parse the downlink message because the terminal device simultaneously receives the carrier and the downlink message can be avoided.

Optionally, the first information may be the foregoing configuration information, or the first information and the foregoing configuration information are sent simultaneously. In this manner, it may also be understood that the configuration information may implement a function of the first information.

Alternatively, the first information may be sent separately from the foregoing configuration information, and the first information may be sent after the configuration information. In this manner, the first information may be carried in downlink control information, or may be carried in RRC reconfiguration information.

The following describes an occasion at which the first network device sends the first information.

In an optional solution, the first network device may indicate, when receiving a paging message or a random access message, the auxiliary node to send the carrier (that is, send the first information), where the paging message is used by a core network to page the terminal device, and the random access message is used by the terminal device to perform random access.

In a specific example, the first network device may send the first information when sending query signaling or before sending the query signaling.

For ease of understanding of Implementation 1, the following uses an inventory service as an example for description with reference to examples. The examples are described by using an example in which a communication system includes one first network device, one auxiliary node, and two terminal devices, that is, a terminal device 1 and a terminal device 2.

Example A: It is assumed that sending duration of a carrier corresponds to one signal.

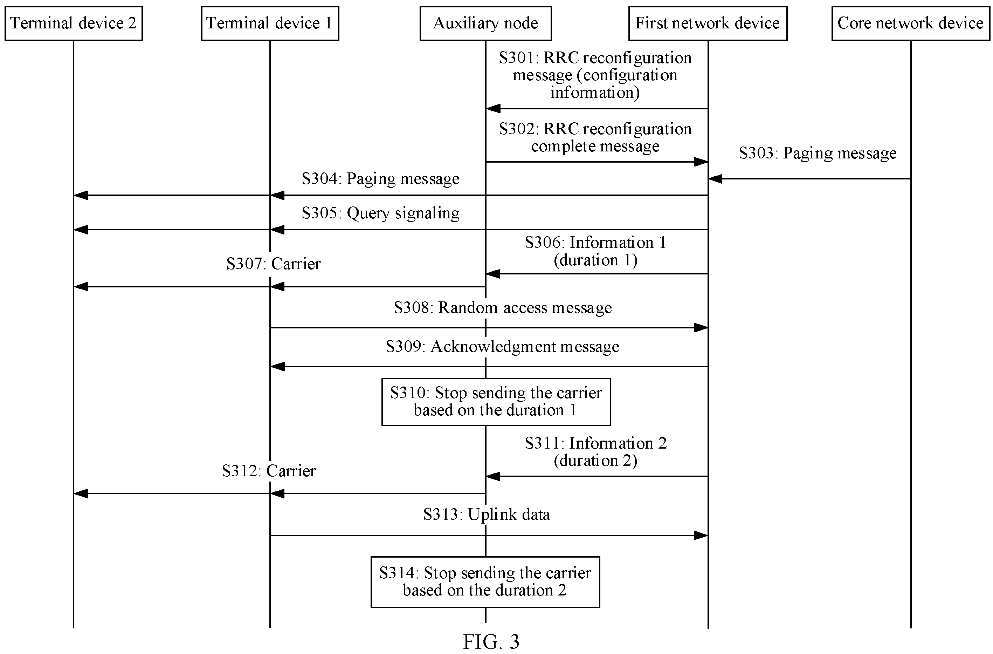

As shown in FIG. 3, the inventory method includes the following steps.

S301: The first network device sends an RRC reconfiguration message to the auxiliary node.

The RRC reconfiguration message carries configuration information.

S302: The auxiliary node sends an RRC reconfiguration complete message to the first network device.

S303: A core network device sends a paging message to the first network device.

It should be noted that a sequence of performing S301 and S303 is not limited in this application. S301 may be performed before S303, or S303 may be performed before S301, or S301 and S303 may be simultaneously performed.

S304: The first network device sends the paging message.

For example, the paging message may be a paging message, select signaling, or the like.

S305: The first network device sends query (Query) signaling.

S306: The first network device sends information 1 to the auxiliary node.

The information 1 is for triggering the auxiliary node to send a carrier. The information 1 carries duration 1, and the duration 1 is duration of a carrier used for a random access message. In transmission in S306 to S310, the information 1 may correspond to the foregoing first information.

S307: The auxiliary node sends the carrier.

S308: The terminal device 1 sends the random access message based on the carrier.

In transmission in S306 to S310, the random access message may correspond to the foregoing first signal. For details about S308, refer to the related descriptions of S203. The details are not described herein again.

S309: The first network device sends an acknowledgment message (ACK) to the terminal device 1.

S310: The auxiliary node may stop sending the carrier based on the duration 1.

S311: The first network device sends information 2 to the auxiliary node.

The information 2 is for triggering the auxiliary node to send a carrier. The information 2 carries duration 2, and the duration 2 is duration of a carrier used for uplink data. In transmission in S311 to S314, the information 2 may correspond to the foregoing first information.

S312: The auxiliary node sends the carrier.

S313: The terminal device 1 sends the uplink data based on the carrier.

In transmission in S311 to S314, the uplink data may correspond to the foregoing first signal. For details about S313, refer to the related descriptions of S203. The details are not described herein again.

S314: The auxiliary node may stop sending the carrier based on the duration 2.

It should be noted that FIG. 3 is described by using only two transmission processes, that is, a transmission process from S306 to S310 and a transmission process from S311 to S314 as examples. In specific implementation, another transmission process may be further included, and may be another transmission process between the first network device and the terminal device 1, or may be a transmission process between the first network device and another terminal device, for example, the terminal device 2. For these transmission processes, refer to descriptions of either of the two transmission processes. Details are not listed herein again.

Example B: It is assumed that sending duration of a carrier corresponds to one service.

A difference between Example A and Example B lies in that, in Example A, for each signal, the first network device triggers, by using one piece of information (for example, the information 1 or the information 2), the auxiliary node to send a carrier, and sending duration of the carrier carried in the information corresponds to one signal. In Example B, before a service starts, the first network device sends, to the auxiliary node, information (for example, information 3) that triggers sending of a carrier, and sending duration of the carrier carried in the information corresponds to one service. Start/end of each signal during execution of the service is not perceived by the auxiliary node.

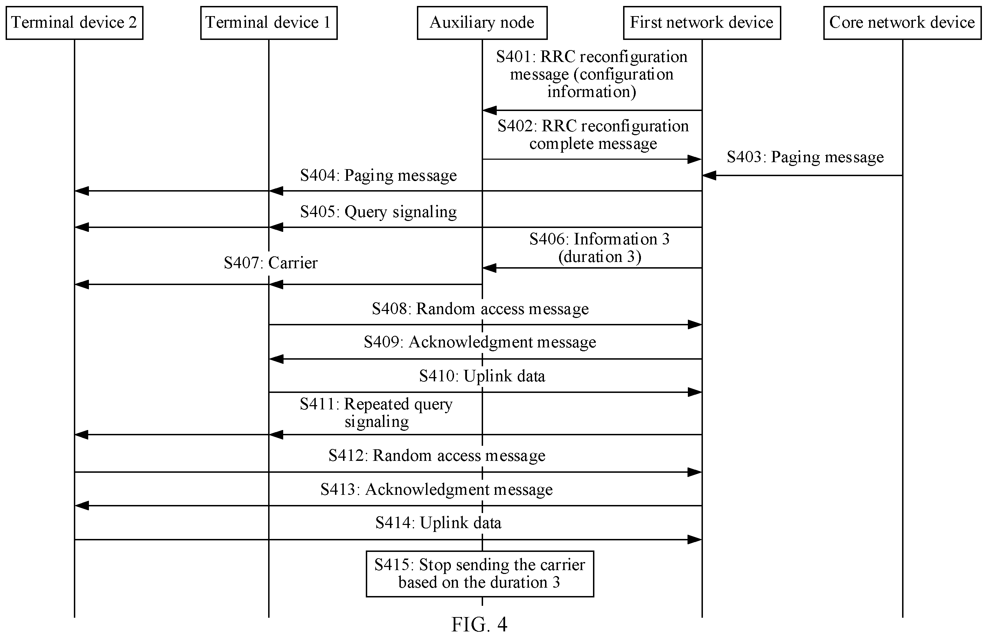

As shown in FIG. 4, the inventory method includes the following steps.

S401: The first network device sends an RRC reconfiguration message to the auxiliary node.

The RRC reconfiguration message carries configuration information.

S402: The auxiliary node sends an RRC reconfiguration complete message to the first network device.

S403: A core network device sends a paging message to the first network device.

It should be noted that a sequence of performing S401 and S403 is not limited in this application. S401 may be performed before S403, or S403 may be performed before S401, or S401 and S403 may be simultaneously performed.

S404: The first network device sends the paging message.

For example, the paging message may be a paging message, select signaling, or the like.

S405: The first network device sends query signaling.

S406: The first network device sends the information 3 to the auxiliary node.

The information 3 is for triggering the auxiliary node to send a carrier. The information 3 carries duration 3, and the duration 3 is duration of a carrier used for a first service. The information 3 may correspond to the foregoing first information.

S407: The auxiliary node sends the carrier.

S408: The terminal device 1 sends a random access message based on the carrier.

The random access message may correspond to the foregoing first signal. For details about S408, refer to the related descriptions of S203. The details are not described herein again.

S409: The first network device sends an acknowledgment message to the terminal device 1.

S410: The terminal device 1 sends uplink data based on the carrier.

The uplink data may correspond to the foregoing first signal. For details about S410, refer to the related descriptions of S203. The details are not described herein again.

S411: The first network device sends QueryRep signaling.

S412: The terminal device 2 sends a random access message based on the carrier.

The random access message may correspond to the foregoing first signal. For details about S412, refer to the related descriptions of S203. The details are not described herein again.

S413: The first network device sends an acknowledgment message to the terminal device 2.

S414: The terminal device 2 sends uplink data based on the carrier.

The uplink data may correspond to the foregoing first signal. For details about S414, refer to the related descriptions of S203. The details are not described herein again.

S415: The auxiliary node may stop sending the carrier based on the duration 3.

It should be noted that FIG. 4 is described by using only an example in which the first service is an inventory process of two terminal devices. In specific implementation, another inventory process may be further included. Details are not listed herein.

### Implementation 2:

The first network device may send second information and third information to the auxiliary node, where the second information is for triggering the auxiliary node to send the carrier, and the third information is for triggering the auxiliary node to stop sending the carrier.

A difference between Implementation 2 and Implementation 1 lies in that, in Implementation 1, the first network device indicates, by indicating the duration of the carrier, an occasion at which the auxiliary node stops sending the carrier, while in Implementation 2, when the first network device needs the auxiliary node to stop sending the carrier, the first network device triggers, by using the third information, the auxiliary node to stop sending the carrier.

In an optional solution, the second information may be the foregoing configuration information, or the second information and the foregoing configuration information are sent simultaneously. In this manner, it may also be understood that the configuration information may implement a function of the second information.

Alternatively, the second information may be sent separately from the foregoing configuration information, and the second information is sent after the configuration information. Optionally, in this manner, the second information may be carried in downlink control information, or may be carried in RRC reconfiguration information.

The following describes occasions at which the first network device sends the second information and the third information.

In an optional solution, when receiving a paging message or a random access message, the first network device may indicate the auxiliary node to send a carrier (that is, send the second information). In a specific example, the first network device may send the second information when sending query signaling/QueryRep signaling or before sending the query signaling/QueryRep signaling.

The first network device may send the third information to the auxiliary node after determining that the first service is completed. In this way, the auxiliary node continuously sends the carrier during the first service between the first network device and the terminal device until the first service ends.

Alternatively, the first network device may send the third information to the auxiliary node after data transmission is completed. In this way, the auxiliary node continuously sends the carrier during the data transmission between the first network device and the terminal device until the data transmission is completed.

Alternatively, the first network device may send the third information to the auxiliary node after a connection with the terminal device is released. In this way, the auxiliary node continuously sends the carrier during a period in which the connection between the first network device and the terminal device is maintained, until the connection between the first network device and the terminal device is released.

Alternatively, the first network device may send the third information to the auxiliary node after transmission of the first signal ends (for example, receiving the first signal or correctly parsing the first signal). In this way, the auxiliary node continuously sends the carrier during transmission of the first signal until sending of the first signal ends.

For ease of understanding of Implementation 2, the following uses an inventory service as an example for description with reference to examples. The examples are described by using an example in which a communication system includes one first network device, one auxiliary node, and two terminal devices, that is, a terminal device 1 and a terminal device 2.

Example C: It is assumed that sending duration of a carrier corresponds to one signal.

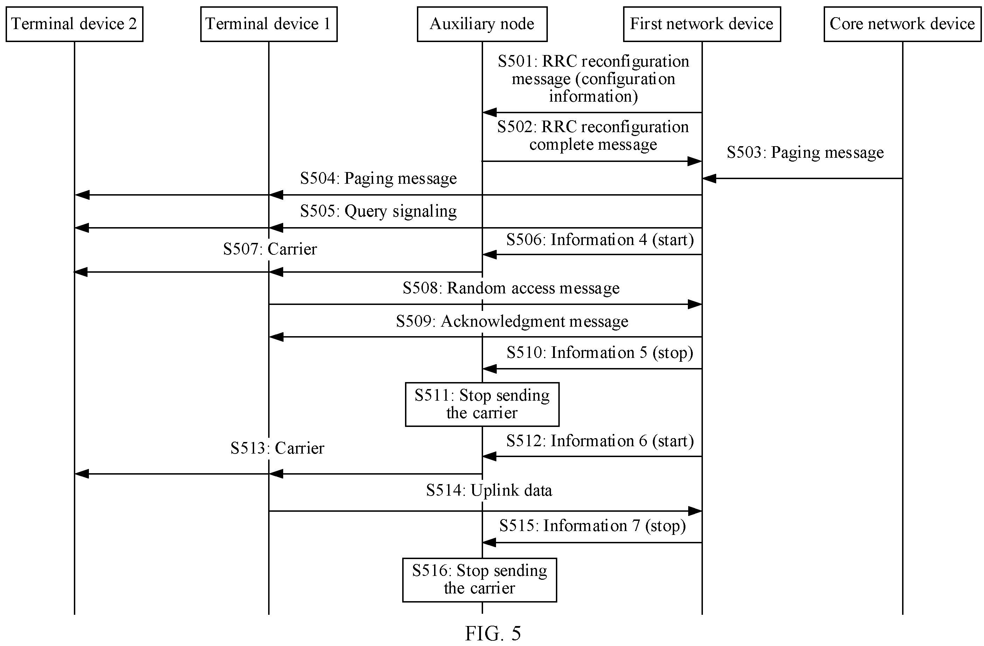

As shown in FIG. 5, the inventory method includes the following steps.

S501: The first network device sends an RRC reconfiguration message to the auxiliary node.

The RRC reconfiguration message carries configuration information.

S502: The auxiliary node sends an RRC reconfiguration complete message to the first network device.

S503: A core network device sends a paging message to the first network device.

It should be noted that a sequence of performing S501 and S503 is not limited in this application. S501 may be performed before S503, or S503 may be performed before S501, or S501 and S503 may be simultaneously performed.

S504: The first network device sends the paging message.

For example, the paging message may be a paging message, select signaling, or the like.

S505: The first network device sends query signaling.

S506: The first network device sends information 4 to the auxiliary node.

The information 4 is for triggering the auxiliary node to send a carrier. In transmission in S506 to S511, the information 4 may correspond to the foregoing second information.

S507: The auxiliary node sends the carrier.

S508: The terminal device 1 sends a random access message based on the carrier.

In transmission in S506 to S511, the random access message may correspond to the foregoing first signal. For details about S507, refer to the related descriptions of S203. The details are not described herein again.

S509: The first network device sends an acknowledgment message to the terminal device 1.

S510: The first network device sends information 5 to the auxiliary node.

The information 5 is for triggering the auxiliary node to stop sending the carrier. In transmission in S506 to S511, the information 5 may correspond to the foregoing third information.

S511: The auxiliary node stops sending the carrier.

S512: The first network device sends information 6 to the auxiliary node.

The information 6 is for triggering the auxiliary node to send a carrier. In transmission in S512 to S516, the information 6 may correspond to the foregoing second information.

S513: The auxiliary node sends the carrier.

S514: The terminal device 1 sends uplink data based on the carrier.

In transmission in S512 to S516, the uplink data may correspond to the foregoing first signal. For details about S513, refer to the related descriptions of S203. The details are not described herein again.

S515: The first network device sends information 7 to the auxiliary node.

The information 7 is for triggering the auxiliary node to stop sending the carrier. In transmission in S512 to S516, the information 7 may correspond to the foregoing third information.

S516: The auxiliary node stops sending the carrier.

It should be noted that FIG. 5 is described by using only two transmission processes, that is, a transmission process from S506 to S511 and a transmission process from S512 to S516 as examples. In specific implementation, another transmission process may be further included, and may be another transmission process between the first network device and the terminal device 1, or may be a transmission process between the first network device and another terminal device, for example, the terminal device 2. For these transmission processes, refer to descriptions of either of the two transmission processes. Details are not listed herein again.

Example D: It is assumed that sending duration of a carrier corresponds to one service.

A difference between Example C and Example D lies in that, in Example C, for each signal, the first network device triggers, by using one piece of information (for example, the information 4 or the information 6), the auxiliary node to send a carrier, and triggers, by using one piece of information (for example, the information 5 or the information 7) the auxiliary node to stop sending the carrier. In Example D, for one service, the first network device triggers, by using one piece of information (for example, information 8), the auxiliary node to send a carrier, and triggers, by using one piece of information (for example, information 9), the auxiliary node to stop sending the carrier. Start/end of each signal during execution of the service is not perceived by the auxiliary node.

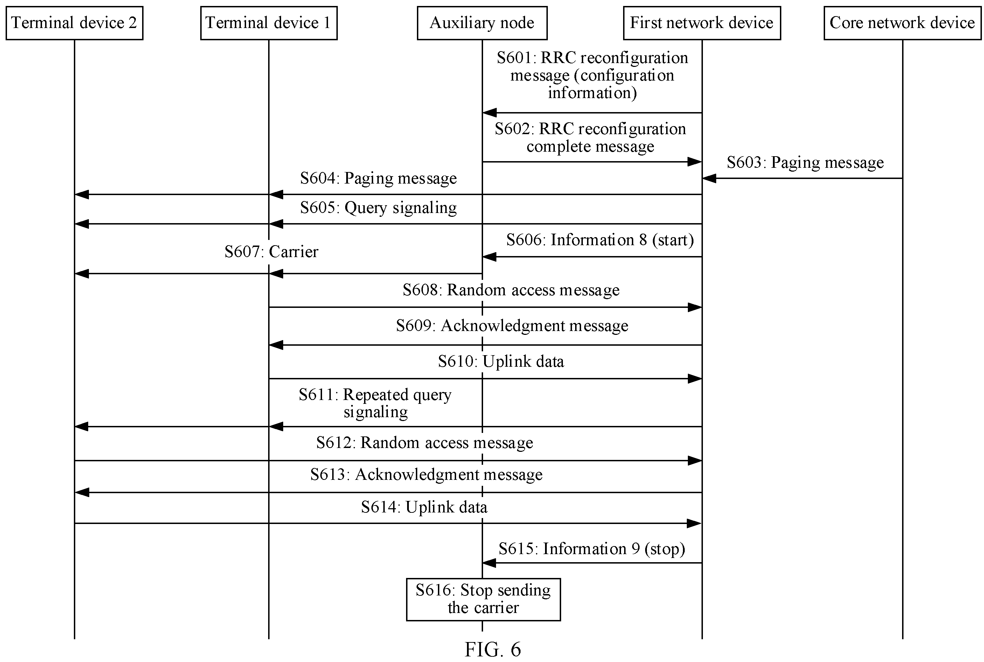

As shown in FIG. 6, the inventory method includes the following steps.

S601: The first network device sends an RRC reconfiguration message to the auxiliary node.

The RRC reconfiguration message carries configuration information.

S602: The auxiliary node sends an RRC reconfiguration complete message to the first network device.

S603: A core network device sends a paging message to the first network device.

It should be noted that a sequence of performing S601 and S603 is not limited in this application. S601 may be performed before S603, or S603 may be performed before S601, or S601 and S603 may be simultaneously performed.

S604: The first network device sends the paging message.

For example, the paging message may be a paging message, select signaling, or the like.

S605: The first network device sends query signaling.

S606: The first network device sends the information 8 to the auxiliary node.

The information 8 is for triggering the auxiliary node to send a carrier. The information 8 may correspond to the foregoing second information.

S607: The auxiliary node sends the carrier.

S608: The terminal device 1 sends a random access message based on the carrier.

The random access message may correspond to the foregoing first signal. For details about S608, refer to the related descriptions of S203. The details are not described herein again.

S609: The first network device sends an acknowledgment message to the terminal device 1.

S610: The terminal device 1 sends uplink data based on the carrier.

The uplink data may correspond to the foregoing first signal. For details about S610, refer to the related descriptions of S203. The details are not described herein again.

S611: The first network device sends QueryRep signaling.

S612: The terminal device 2 sends a random access message based on the carrier.

The random access message may correspond to the foregoing first signal. For details about S612, refer to the related descriptions of S203. The details are not described herein again.

S613: The first network device sends an acknowledgment message to the terminal device 2.

S614: The terminal device 2 sends uplink data based on the carrier.

The uplink data may correspond to the foregoing first signal. For details about S614, refer to the related descriptions of S203. The details are not described herein again.

S615: The first network device sends the information 9 to the auxiliary node.

The information 9 is for triggering the auxiliary node to stop sending the carrier. The information 9 may correspond to the foregoing third information.

S616: The auxiliary node stops sending the carrier.

It should be noted that FIG. 6 is described by using only an example in which the first service is an inventory process of two terminal devices. In specific implementation, another inventory process may be further included. Details are not listed herein.

In this application, the first network device configures the carrier for the auxiliary node, so that the auxiliary node can provide the carrier for the terminal device. In addition, the first network device can control the carrier of the auxiliary node by using the configuration information, so as to control a signal of the terminal device. For example, the first network device can control the frequency, the transmit power, or the like of the carrier to control a frequency, a transmit power, or the like of the signal of the terminal device.

In addition, the first network device may adjust the carrier of the auxiliary node based on a most recently received signal, so that a frequency offset of the terminal device can be adjusted, thereby helping improve communication performance between the first network device and the terminal device.

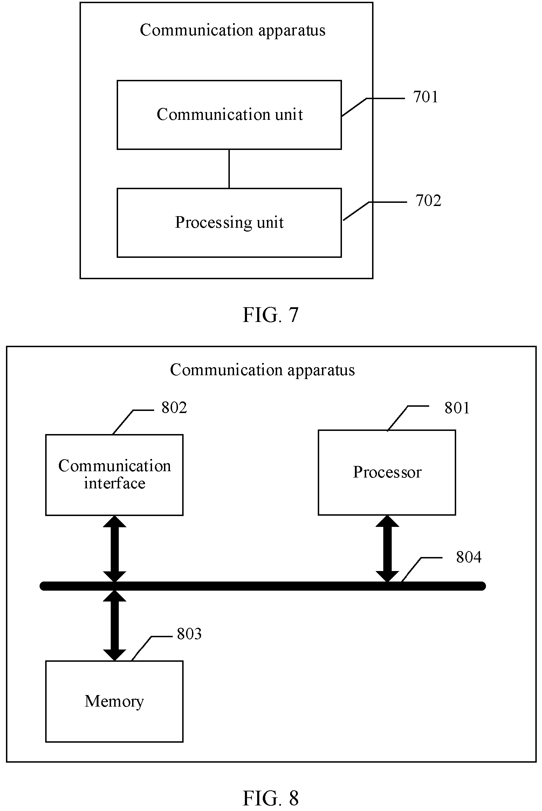

Based on a same inventive concept as the method embodiments, an embodiment of this application provides a communication apparatus. A structure of the communication apparatus may be shown in FIG. 7. The communication apparatus includes a communication unit 701 and a processing unit 702.

In an implementation, the communication apparatus may be specifically configured to implement the method performed by the first network device in the embodiment in FIG. 2. The apparatus may be the first network device, may be a chip or a chip group in the first network device, or a part of the chip that is configured to perform a related method function. The processing unit 702 is configured to: send configuration information through the communication unit 701, where the configuration information is for configuring a carrier sent by an auxiliary node, and the carrier is used by a terminal device to generate a first signal; and receive the first signal from the terminal device through the communication unit 701.

Optionally, the processing unit 702 is further configured to send first information through the communication unit 701, where the first information is for triggering the auxiliary node to send the carrier, and/or the first information indicates sending duration of the carrier.

Optionally, the processing unit 702 is further configured to: send second information through the communication unit 701, where the second information is for triggering the auxiliary node to send the carrier; and send third information through the communication unit 701, where the third information is for triggering the auxiliary node to stop sending the carrier.

Optionally, the processing unit 702 is further configured to: before sending the third information, determine that a first service is completed, data transmission is completed, or a connection with the terminal device is released; or determine that transmission of the first signal ends.

Optionally, the processing unit 702 is further configured to indicate, when receiving a paging message or a random access message, the auxiliary node to send the carrier, where the paging message is used by a core network to page the terminal device, and the random access message is used by the terminal device to perform random access.

In an implementation, the communication apparatus may be specifically configured to implement the method performed by the auxiliary node in the embodiment in FIG. 2. The apparatus may be the auxiliary node, may be a chip or a chip group in the auxiliary node, or a part of the chip that is configured to perform a related method function. The processing unit 702 is configured to: receive configuration information through the communication unit 701, where the configuration information is for configuring a carrier sent by an auxiliary node, and the carrier is used by a terminal device to generate a first signal; and send the carrier based on the configuration information through the communication unit 701.

Optionally, the processing unit 702 is further configured to receive first information through the communication unit 701, where the first information is for triggering the auxiliary node to send the carrier, and/or the first information indicates sending duration of the carrier.

Optionally, the processing unit 702 is further configured to: receive second information through the communication unit 701 before sending the carrier based on the configuration information, where the second information is for triggering the auxiliary node to send the carrier; and receive third information through the communication unit 701 after sending the carrier based on the configuration information, where the third information is for triggering the auxiliary node to stop sending the carrier.

Division into modules in embodiments of this application is an example, is merely division into logical functions, and may be another division in actual implementation. In addition, functional modules in embodiments of this application may be integrated into one or more processors, or each of the modules may exist alone physically, or two or more modules may be integrated into one module. The integrated module may be implemented in a form of hardware, or may be implemented in a form of a software functional module. It may be understood that, for functions or implementations of the modules in this embodiment of this application, further refer to related descriptions in the method embodiments.

In a possible manner, the communication apparatus may be shown in FIG. 8. The apparatus may be a communication device or a chip in the communication device. The communication device may be the terminal device in the foregoing embodiments or the first network device in the foregoing embodiments. The apparatus includes a processor 801 and a communication interface 802, and may further include a memory 803. The processing unit 702 may be the processor 801. The communication unit 701 may be the communication interface 802. Optionally, the processor 801 and the memory 803 may alternatively be integrated together. The processor 801 may include one or more processors, the communication interface 802 may include one or more communication interfaces, and the memory 803 may include one or more memories.

The processor 801 may be a CPU, a digital processing unit, or the like. The communication interface 802 may be a transceiver, an interface circuit like a transceiver circuit, a transceiver chip, or the like. The apparatus further includes the memory 803, configured to store a program executed by the processor 801. The memory 803 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory 803 is any other medium that can be configured to carry or store expected program code in a form of instructions or a data structure and that can be accessed by a computer, but is not limited thereto.

The processor 801 is configured to execute the program code stored in the memory 803, and is specifically configured to perform actions of the processing unit 702. Details are not described herein again in this application. The communication interface 802 is specifically configured to perform actions of the communication unit 701. Details are not described herein again in this application.

A specific connection medium between the communication interface 802, the processor 801, and the memory 803 is not limited in embodiments of this application. In this embodiment of this application, the memory 803, the processor 801, and the communication interface 802 are connected through a bus 804 in FIG. 8. The bus is represented by using a bold line in FIG. 8. A connection manner between other components is merely an example for description, and is not limited thereto. Buses may be classified into an address bus, a data bus, a control bus, and the like. For ease of representation, only one bold line is for representing the bus in FIG. 8, but this does not mean that there is only one bus or only one type of bus.

An embodiment of the present invention further provides a computer-readable storage medium, configured to store computer software instructions that need to be executed for execution of the foregoing processor, and the computer-readable storage medium includes a program that needs to be executed for execution of the foregoing processor.

An embodiment of this application further provides a communication system. The communication system includes a communication apparatus configured to implement a function of the first network device in the embodiment in FIG. 2 and a communication apparatus configured to implement a function of the auxiliary node in the embodiment in FIG. 2. The communication system may further include a communication apparatus that functions as the terminal device in the embodiment in FIG. 2.

A person skilled in the art should understand that embodiments of this application may be provided as a method, a system, or a computer program product. Therefore, in this application, a form of hardware-only embodiments, software-only embodiments, or embodiments with a combination of software and hardware may be used. In addition, in this application, a form of a computer program product that is implemented on one or more computer-usable storage media (including but not limited to a disk memory, a CD-ROM, an optical memory, and the like) that include computer-usable program code may be used.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that the modifications and variations of this application fall within the scope of protection defined by the following claims and their equivalent technologies.

## Claims

1. A communication method, wherein the method comprises:
sending configuration information, wherein the configuration information is for configuring a carrier sent by an auxiliary node, and the carrier is used by a terminal device to generate a first signal; and
receiving the first signal from the terminal device.

2. The method according to claim 1, wherein the configuration information indicates at least one of the following: a frequency of the carrier, a transmit power of the carrier, a modulation scheme of the carrier, a signal type of the carrier, or time information of the carrier.

3. The method according to claim 2, wherein that the configuration information indicates the frequency of the carrier comprises:
the configuration information indicates a bandwidth part corresponding to the carrier; or
the configuration information indicates adjustment information of the frequency of the carrier.

4. The method according to any one of claims 1 to 3, wherein the method further comprises:
sending first information, wherein the first information is for triggering the auxiliary node to send the carrier, and/or the first information indicates sending duration of the carrier.

5. The method according to claim 4, wherein the duration corresponds to a first service; or the duration corresponds to data transmission; or the duration corresponds to a connection between a network device and the terminal device; or
the duration corresponds to transmission of the first signal.

6. The method according to claim 5, wherein the duration is related to a signaling length or sending time of the first signal.

7. The method according to claim 6, wherein if the first signal is uplink data, the duration is first duration; or if the first signal is a random access message, the duration is second duration, and the first duration is greater than the second duration.

8. The method according to any one of claims 4 to 7, wherein that the first information indicates the sending duration of the carrier comprises:
the first information comprises a sending duration value of the carrier; or
the first information comprises a transmission parameter of the terminal device, wherein the transmission parameter is for determining the sending duration value of the carrier.

9. The method according to claim 8, wherein the transmission parameter comprises at least one of the following: a quantity of repetitions, a coding scheme, a transport block size, uplink transmission bandwidth, or a data processing delay.

10. The method according to any one of claims 1 to 3, wherein the method further comprises:
sending second information, wherein the second information is for triggering the auxiliary node to send the carrier; and
sending third information, wherein the third information is for triggering the auxiliary node to stop sending the carrier.

11. The method according to claim 10, wherein before sending the third information, the method further comprises:
determining that a first service is completed, data transmission is completed, or a connection with the terminal device is released; or
determining that transmission of the first signal ends.

12. The method according to claim 4 or 10, wherein the method further comprises:
when a paging message or a random access message is received, indicating the auxiliary node to send the carrier, wherein
the paging message is used by a core network to page the terminal device, and the random access message is used by the terminal device to perform random access.

13. A communication method, wherein the method comprises:
receiving configuration information, wherein the configuration information is for configuring a carrier sent by an auxiliary node, and the carrier is used by a terminal device to generate a first signal; and
sending the carrier based on the configuration information.

14. The method according to claim 13, wherein the configuration information indicates at least one of the following: a frequency of the carrier, a transmit power of the carrier, a modulation scheme of the carrier, a signal type of the carrier, or time information of the carrier.

15. The method according to claim 14, wherein that the configuration information indicates the frequency of the carrier comprises:
the configuration information indicates a bandwidth part corresponding to the carrier; or
the configuration information indicates adjustment information of the frequency of the carrier.

16. The method according to any one of claims 13 to 15, wherein the method further comprises:
receiving first information, wherein the first information is for triggering the auxiliary node to send the carrier, and/or the first information indicates sending duration of the carrier.

17. The method according to claim 16, wherein the duration corresponds to a first service; or the duration corresponds to data transmission; or the duration corresponds to a connection between a network device and the terminal device; or
the duration corresponds to transmission of the first signal.

18. The method according to claim 17, wherein the duration is related to a signaling length or sending time of the first signal.

19. The method according to claim 18, wherein if the first signal is uplink data, the duration is first duration; or if the first signal is a random access message, the duration is second duration, and the first duration is greater than the second duration.

20. The method according to any one of claims 16 to 19, wherein that the first information indicates the sending duration of the carrier comprises:
the first information comprises a sending duration value of the carrier; or
the first information comprises a transmission parameter of the terminal device, wherein the transmission parameter is for determining the duration value of the carrier.

21. The method according to claim 20, wherein the transmission parameter comprises at least one of the following: a quantity of repetitions, a coding scheme, a transport block size, uplink transmission bandwidth, or a data processing delay.

22. The method according to any one of claims 13 to 15, wherein the method further comprises:
receiving second information before sending the carrier based on the configuration information, wherein the second information is for triggering the auxiliary node to send the carrier; and
receiving third information after sending the carrier based on the configuration information, wherein the third information is for triggering the auxiliary node to stop sending the carrier.

23. A communication apparatus, comprising a unit or a module configured to perform the method according to any one of claims 1 to 12, or comprising a unit or a module configured to perform the method according to any one of claims 13 to 22.

24. A computer-readable storage medium, wherein the computer storage medium stores computer-readable instructions, and when the computer-readable instructions are run on a communication apparatus, the method according to any one of claims 1 to 12 is performed, or the method according to any one of claims 13 to 22 is performed.

25. A computer program product, wherein when the computer program product is run on a device, the device is caused to perform the method according to any one of claims 1 to 22.
